# EUROPEAN PATENT SPECIFICATION

(11) **EP 3 416 350 B1**
(45) Date of publication and mention of the grant of the patent: **18.03.2020**
(21) Application number: 18173719.8
(22) Date of filing: 23.05.2018
(51) Int. Cl.: H04L 29/06, H04L 29/08, H04W 48/18

(54) **METHOD OF MAKING VOIP CALL ON A MOBILE COMMUNICATION DEVICE**
VERFAHREN ZUM HERSTELLEN EINES VOIP-ANRUFS AUF EINEM MOBILEN KOMMUNIKATIONSGERÄT
PROCÉDÉ D'APPEL VOIP SUR UN DISPOSITIF DE COMMUNICATION MOBILE

(30) Priority: 13.06.2017 EE 201700030 U
(43) Date of publication of application: 19.12.2018
(73) Proprietor: Top Connect OÜ, 11415 Tallinn (EE)
(72) Inventor: Sobolev, Vladislav, 13917 Tallinn (EE)
(74) Representative: AAA Patendibüroo OÜ

(56) References cited:
- US-A1- 2013 308 632
- "3rd Generation Partnership Project; Technical Specification Group Services and System Aspects; Customised Applications for Mobile network Enhanced Logic (CAMEL); Service description; Stage 1 ( )", 3GPP STANDARD ; TECHNICAL SPECIFICATION ; 3GPP TS 22.078, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V14.0.0, 24 March 2017 (2017-03-24), pages 1-95, XP051295630, [retrieved on 2017-03-24]

## Description

### Technical Field

The present invention relates to mobile cellular telecommunication networks and application software for Mobile Communication Devices (hereinafter - Mobile Device). More particularly, the present invention relates to methods of enrichment of Mobile Device's capabilities to implement features, which are not available on the Mobile Device, due to software and/or hardware limitations.

### Background Art

VoIP (*Voice over Internet Protocol*) technology is widely used in voice-communications. VoIP technology has many advantages comparing with classic PSTN (*Public Switched Telephone Network*) telephony. The usual advantages are following cheaper cost, saving of the network bandwidth, better voice quality, faster call connection time, etc.

Current VoIP technology is used in mobile networks on the consumer market by two main methods:
firstly the external applications including downloadable on smartphones VoIP applications - first of all Viber (https://www.viber.com): also a Skype (https://www.skype.com) and WhatsAPP (https://www.whatsapp.com). These applications are easy to install, they do not need to have support from the Mobile networks, they work on almost on any smartphone, there is no need to have any integration with mobile networks, the applications are cheap to implement by service provider or Mobile operator.

All these VoIP applications have similar drawbacks.

Mobile user is unable to make VoIP-call by native way: impossible to dial from native phone dialler, or repeat a call from a call history, or make a call from the address-book, because these calls are impossible to intercept by Mobile Applications using tools provided by OS (*Operating System*), so Mobile Application cannot convert them into VoIP calls.

In order to make a VoIP call user must find icon of the Mobile Application first, then tap to open it, then must figure out how to dial from this specific application, because the way of presentation of dialling screen is significantly different from the native screen, in many cases user need to find a dialler somewhere in menu of this VoIP application, which required from the user even more effort.

As a conclusion the usability of these applications for ordinary outbound calls is low and their use forces the users to change their habits significantly.

In some cases the problem can be solved by deep modification of OS, but this way will not work for downloadable applications at all, because user need to reinstall OS, make jailbreak to achieve root-rights and these operations are extremely complex and dangerous for ordinary use, the handset can be broken after such upgrade, so this way is not applicable for billions users and their handsets on the market, so the only way to use it for user to achieve the native dialling - to change the handset to compatible with such method.

On some versions of Android OS are possible to intercept native dialling from the VoIP application, but this solution has following drawbacks.

It does not work on all Android versions.

When user dials first time OS may POP-up additional dialog window to choose the default dialling application, this dialog window may confuse the user and user may select wrong answer.

In some cases it does not work if user will dial a number from a call history which was dialled previously via mobile network.

On some versions of iOS are possible to redial via call history, if the call previously was dialled manually from the VoIP application, so user still have to open the VoIP application in order to make this first call.

These solutions are not universal for all handsets but OS-specific ways which work in some specific cases.

Second main method for use of VoIP technology in mobile networks on the consumer market are Network supported applications, e.g. VoLTE or Voice over LTE (http://www.radio- electronics.com/ info/cellulartelecomms/lte-long-term-evolution/voice-over-lte-volte.php). They are implemented on handsets level, required support from Operating System, hardware and software, has to be integrated with Mobile network. Advantage of these applications is native way of usage, no need to open Mobile Application in order to make a call, so no need to change habits by the user. As a drawback - VoLTE technology requires support from handset's hardware and software, and has to be deeply integrated with Mobile network. This is very expensive way: to implement this technology mobile operator has to make huge changes in mobile network including building LTE network, and user must change the handset to compatible with VoLTE.

These above solutions have the following drawbacks:
Need to have a handset which supports VoLTE, unfortunately billions handsets on the market have no such support, so the only way to use it for user - change the handset to compatible;
Mobile network must have support of VoLTE, it is extremely expensive for mobile operator;
VoLTE does not work in Roaming by default, the Operator must do VoLTE roaming with each foreign operator.

Document US2013308632 discloses methods and apparatus for routing a terminating call in a network including a circuit switched (CS) network, a packet switched (PS) network and an IP multimedia subsystem (IMS) such that the network's call connection performance is optimised.

Document XP051295630, titled "3rd Generation Partnership Project; Technical Specification Group Services and System Aspects; Customised Applications for Mobile network Enhanced Logic (CAMEL); Service description; Stage 1", 3GPP TS 22.078, published on 24-03-2017, describes the CAMEL feature which provides the mechanisms to support services consistently and independently of the serving network.

### Summary of invention

The aim of the invention, which is defined by the subject-matter of independent claim 1, is to modify the procedure of processing of an Outbound call in the Mobile Network enabling to transfer a Mobile Originating call initiated by the caller by simple dialling of the addressee's number from the mobile device's keyboard, or taken either from Address Book or Call History into VoIP call, in other words to enable to the user to dial (initiate) a VoIP call as an usual Mobile Originating call. For this the technical problem on how to transform a made by the caller a Mobile Originating call to a VoIP call both in Home Mobile Network and in Visited Mobile Network (roaming) is to be solved.

The subject aim is achieved using a method of making VoIP call on a mobile device having an installed VoIP application, where Mobile Network using CAMEL (*Customised Application for Mobile network Enhanced Logic* ) intercepts the caller dialled Mobile Originating call, extracts from this call the call-related information and terminates the Mobile Originating Call, the extracted information is used to send PUSH-message to the mobile device, this PUSH-message is used to activate VoIP application having ability to initiate by receiving the PUSH-notification a VoIP outbound call, hence this activated VoIP application initiates a VoIP outbound call.

The call-related information contains at least the destination number dialled by the caller.

Mobile Network terminates Mobile Originating Call before VoIP outbound call reaches the Destination.

### Brief description of drawings

The embodiment of the invention will further be described with reference to the listed below drawings:
Figure 1 - Mobile Device and the structure Mobile Network Setup to initiate VoIP Call using CAMEL and PUSH-message.
Figure 2 - Flow chart of the Outbound VoIP call initiated via CAMEL and PUSH-message.

### Description of embodiments

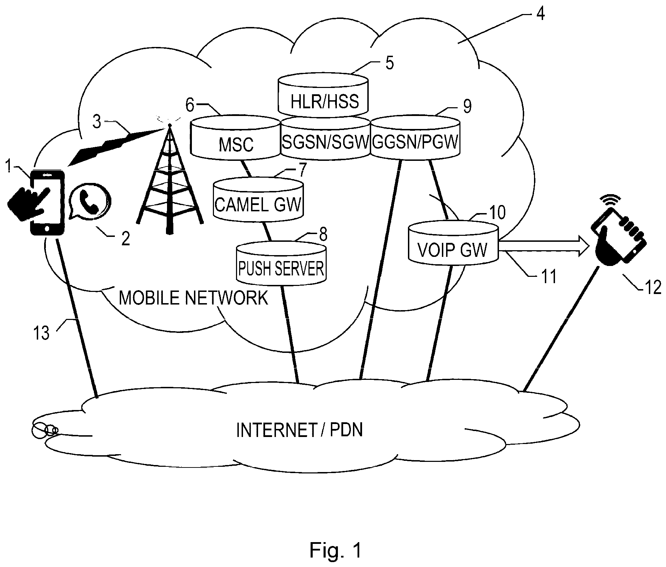

Disclosed on Figure 1 Mobile Device and the structure Mobile Network Setup to initiate VoIP Call using CAMEL and PUSH-message includes belonging to the user mobile device (smartphone) 1 with installed VoIP Application 2, at that the VoIP Application 2 shall have ability to initiate an outbound call when receiving the respective PUSH-notification from the PUSH server 8. The mobile device 1 is able to use mobile services in Mobile Network 4 in HLR/HSS 5 via wireless connection 3. CAMEL GW 7 is connected to PUSH server 8 and to the signalling network MSC (Mobile Switching Centre) 6 and acts here as gsmSCF (*GSM Service Control Function).*

CAMEL GW 7 is configured to recognize Mobile User's outbound calls (MOC) received from the signalling network MSC 6, to extract from this call the call-related information and to deliver this information (MSISDN and B-nr (*B-number*) dialled by the caller) to PUSH Server 8. PUSH Server 8 is connected to Packet Data networks (PDN, Internet) and is able to send PUSH message to Mobile Device 1 via PUSH services, for example via Apple Push Notification service (APNs), Google Cloud Messaging (GCM) or by any similar way. VoIP Application 2 and Operating System (OS) on Mobile Device 1 are configured to react on PUSH-messages in a way to generate outbound VoIP-Call via available Mobile DATA-connectivity (Including Mobile DATA in Mobile Network 4, WiFi 13, *etc*.). VoIP GW 10 is connected to Packet Data networks (Internet) and to GGSN/PGW 9 to receive VoIP Call from Mobile User and subsequently to deliver this VoIP call 11 to Destination User 12.

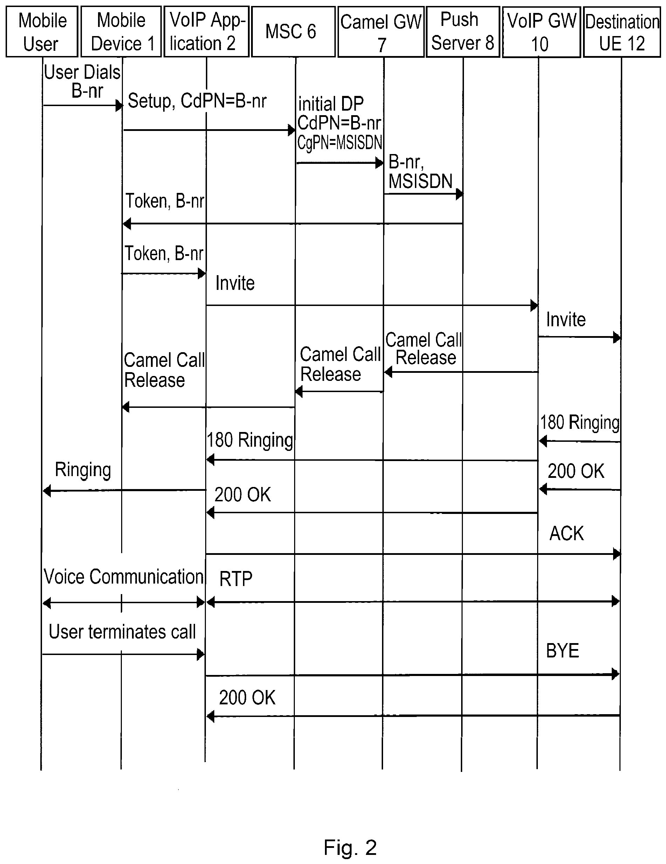

Presented in Figure 2 flow chart discloses in detailed way the call flow according to the present invention.

Mobile User makes a regular outbound call from his Mobile Device 1 dialling Destination Number (B-nr) from the Native Dialer, or from Call History, or from Address Book i.e. using the traditional means for initiating a call.

Mobile Device 1 takes this call and starts making Call setup via Mobile Network 3.

Call setup Signalling reaches MSC 6.

MSC 6 delivers Initial DP message (call) to GAMEL GW 7 (gsmSCF); GAMEL GW 7 extracts MSISDN or IMSI, and B-nr from the CAP (Camel Application Part) signalling flow and delivers it to Push Server 8.

Push Server 8 converts MSISDN or IMSI into corresponding device Token and sends PUSH-message to Mobile Device 1. PUSH-message contains at least B-nr as a payload.

OS on the Mobile Device 1 based on received Token from the PUSH-message initiates (wakeup or start) corresponding VoIP Application 2 and delivers B-nr as a payload.

VoIP Application 2 makes a VoIP Call via VoIP GW 10. In general it can be any type of VoIP protocol, in particular SIP-protocol (Session Initiating Protocol) use of which is shown on FIG. 2 as an example of usage. For SIP-protocol VoIP Call starts from INVITE message. Alternatively instead of SIP any other VoIP protocol could be used with corresponding changes in VoIP call flow.

INVITE reaches VoIP GW 10, MSISDN can be used as CgPN (Calling Party Number), and B-nr can be used as CdPN (Called Party number, same as B-Nr).

As soon as INVITE reaches VoIP GW 10, VoIP GW 10 sends message for release still regular outbound Camel call attempt "Camel call Release" via Camel GW 7 to MSC 6.

MSC 6 sends the received "Camel call Release" message towards the Mobile Device 1.

INVITE reaches Destination User Equipment (UE) 12.

Message 180 Ringing is sent from Destination User 12 Equipment back to VoIP Application 2 via VoIP GW 10.

Mobile User hears Ringing as well (long rings or similar audio).

As soon as Destination user 12 will answer, the message 200 OK will be sent from Destination User 12 Equipment back to VoIP Application 2 via VoIP GW 10.

VoIP Application 2 will send ACK (acknowledgement) message to Destination User Equipment 12.

RTP-path will be established between VoIP Application 2 and Destination User Equipment 12 together with connection to Mobile User - the conversation is started.

After the conversation, any participant can send a BYE request to terminate the session. On FIG.2 as an example calling party (Mobile User) terminates a SIP-Call.

Alternatively, instead of INVITE any other Success event at any step could be used to determinate if VOIP call could be made or not.

Above has been represented the method for making VoIP Call in home network. To make this method work in the roaming too (in visited networks), each visited network must have the Camel Roaming with Home Network.

## Claims

1. A method of making a Voice over Internet Protocol, VoIP, outbound call on a mobile device (1) having installed a VoIP application (2) having ability to initiate by receiving a PUSH-message a VoIP outbound call based on call related information of a Mobile Originated Call;
where the Mobile Originated call setup made from the mobile device by a user is sent to a Mobile Network;
**characterized in that**
the Mobile Originated call is intercepted by a CAMEL gateway, GW, (7) of the Mobile Network using Customised Application for Mobile network Enhanced Logic, CAMEL;
the call related information is extracted from the Mobile Originated call by the CAMEL GW of the Mobile Network using CAMEL, wherein the call related information includes a destination number dialled by the user;
the Mobile Originated call is terminated by a VoIP gateway, GW, (10) of the Mobile Network using CAMEL call release message;
the call-related information is sent by the CAMEL GW to a PUSH-server (8) and is used by the PUSH-server to send a PUSH-message comprising a token and the call related information to the mobile device of the user;
the PUSH-message comprising the token is sent by the PUSH-server to the mobile device to wake up the VoIP application;
the VoIP application is activated by the token in the received PUSH-message and;
the VoIP outbound call is initiated by the activated VoIP application using the call related information and made via the VoIP GW of the Mobile Network.

## Patentansprüche

1. Verfahren zum Herstellen eines ausgehendes Voice-over-Internet Protocol-Anruf, VoIP-Anruf, auf einem mobilen Kommunikationsgerät (1), indem eine VoIP-Anwendung (2) installiert wird, um die Fähigkeit zu haben, durch die Annahme einer Push-Benachrichtigung, ein ausgehender VoIP-Anruf, der auf anrufsbezogener Information eines mobil erstellten Anrufes basiert, zu initiieren;
bei dem der mobil erstellte Anruf-Aufbau von einem mobilen Kommunikationsgerät durch einen Nutzer an ein mobiles Netzwerk geschickt wird;
**dadurch gekennzeichnet, dass**
der mobil erstellte Anruf durch ein CAMEL-Gateway, GW, (7) des mobilen Netzwerks durch die Verwendung der CAMEL-Technik, Kundenspezifische Anwendung für erweiterte Logik von Mobilnetzen, unterbrochen wird;
die anrufbezogene Information von einem mobil erzeugten Anruf durch ein CAMEL GW aus dem mobilen Netzwerk exzerpiert wird, indem CAMEL-Technik genutzt wird, wobei die verbundene anrufbezogene Information eine Zielnummer beinhaltet, die vom Nutzer gewählt wurde;
der mobil erzeugte Anruf von einem VoIP-Gateway, GW, (10) des mobilen Netzwerks beendet wird, indem ein CAMEL-Ruffreigabebenachrichtigung gesendet wird;
die anrufbezogene Information durch ein CAMEL GW zu einem PUSH-Server (8) gesendet wird und vom PUSH-Server genutzt wird, um eine PUSH-Benachrichtigung, die das Token und die anrufbezogene Information beinhaltet, an das mobile Kommunikationsgerät des Nutzers zu schicken;
die PUSH-Benachrichtigung, die das Token beinhaltet, durch einen PUSH-Server zum mobilen Kommunikationsgerät geschickt wird, um die VolP-Anwendung zu aktivieren;
die VolP-Anwendung durch den Token in der erhaltenen PUSH-Benachrichtigung aktiviert wird und;
der ausgehende VolP-Anruf durch die aktivierte VolP-Anwendung initiiert wird, indem die anrufbezogene Information genutzt und durch VoIP-GW des mobilen Netzwerks erzeugt wird.

## Revendications

1. Procédé pour effectuer un appel sortant VoIP, voix par le protocole de l'internet, sur un dispositif de communication mobile (1) sur lequel est installé une application VoIP (2) ayant la capacité de lancer, en recevant un message PUSH, un appel sortant VoIP basé sur les informations relatives à l'appel d'un appel en provenance d'un mobile;
où la configuration des appels en provenance d'un mobile, effectuée de mobile par un utilisateur est envoyée à un réseau de téléphonie mobile;
**caractérisé en ce que**
l'appel en provenance d'un mobile est intercepté par une passerelle CAMEL, GW, (7) du réseau de téléphonie mobile utilisant une application personnalisée pour la logique améliorée du réseau de téléphonie mobile, CAMEL;
les informations relatives à l'appel sont extraites de l'appel en provenance d'un mobile par le CAMEL GW du réseau de téléphonie mobile utilisant CAMEL, les informations liées à l'appel comprenant un numéro de destination composé par l'utilisateur;
l'appel en provenance d'un mobile est terminé par une passerelle VoIP, GW, (10) du réseau de téléphonie mobile utilisant le message de libération de l'appel CAMEL;
les informations relatives à l'appel sont envoyées par le CAMEL GW à un serveur PUSH (8) et sont utilisées par le serveur PUSH pour envoyer un message PUSH comprenant un jeton et les informations relatives à l'appel au dispositif mobile de l'utilisateur;
le message PUSH comprenant le jeton est envoyé par le serveur PUSH au dispositif mobile pour réveiller l'application VoIP;
l'application VoIP est activée par le jeton dans le message PUSH reçu et;
l'appel sortant VoIP est initié par l'application VoIP activée en utilisant les informations relatives à l'appel et effectué via le VoIP GW du réseau de téléphonie mobile.
